# EUROPÄISCHE PATENTSCHRIFT

(11) **EP 2 684 675 B1**
(45) Veröffentlichungstag und Bekanntmachung des Hinweises auf die Patenterteilung: **27.11.2019**
(21) Anmeldenummer: 12005126.3
(22) Anmeldetag: 11.07.2012
(51) Int. Cl.: B29C 51/16, B32B 3/26, B32B 27/32, G09F 3/04

(54) **Polymerfolie zum In-Mould-Etikettieren**
Feuille polymère pour étiquetage moulé
Polymer film for in-mould labelling

(43) Veröffentlichungstag der Anmeldung: 15.01.2014
(73) Patentinhaber: Treofan Germany GmbH & Co. KG, 66539 Neunkirchen (DE)
(72) Erfinder: Düpre, Yvonne, 67677 Enkenbach-Alsenbom (DE)
(74) Vertreter: Mai Dörr Besier European Patent Attorneys

(56) Entgegenhaltungen:
- WO-A1-2009/010178
- WO-A1-2010/121802

## Beschreibung

Die vorliegende Erfindung betrifft eine Polymerfolie zum In-Mould-Etikettieren (in-mould labeling; IML).

Etikettenfolien umfassen ein umfangreiches und technisch komplexes Gebiet. Man unterscheidet verschiedene Etikettiertechniken, welche hinsichtlich der Prozessbedingungen grundverschieden sind und zwangsläufig an die Etikettenmaterialien unterschiedliche technische Anforderungen stellen. Allen Etikettierprozessen ist gemeinsam, dass als Endergebnis optisch ansprechend etikettierte Behältnisse resultieren müssen, bei denen eine gute Haftung auf dem etikettierten Behältnis gewährleistet sein muss.

Bei den Etikettierverfahren werden sehr verschiedene Techniken zum Applizieren des Etiketts angewendet. Man unterscheidet zwischen Selbstklebeetiketten, Rundumetiketten, Schrumpfetiketten, In-Mould Etiketten, Patch Labelling usw.. Die Verwendung einer Folie aus thermoplastischem Kunststoff als Etikett ist in allen diesen verschiedene Etikettierverfahren möglich.

Auch beim In-Mould Etikettieren wird zwischen verschiedenen Techniken unterschieden, bei denen verschiedene Verfahrensbedingungen angewendet werden. Allen In-Mould Etikettierverfahren ist gemeinsam, dass das Etikett am eigentlichen Formgebungsverfahren des Behälters teilnimmt und währenddessen appliziert wird. Hierbei kommen jedoch sehr verschiedene Formgebungsverfahren zum Einsatz, wie beispielsweise Spritzgussverfahren, Blasformverfahren und Tiefziehverfahren.

In allen In-Mould-Etikettierverfahren erfolgt die Verarbeitung der Etikettenfolien Ober einzelne Etiketten, die in die jeweilige Form eingelegt werden müssen. Demzufolge ist die Vereinzelbarkeit (Entstapelbarkeit) der Etiketten ein kritischer Faktor für die Effizienz des gesamten Etikettiervorgangs. Diese kann ggf. durch Zusatz von Puder, das auf das in der Regel bedruckte Etikett aufgebracht wird und quasi als Abstandshalter fungiert, verbessert werden.

Die Entstapelbarkeit der einzelnen Etiketten spielt aber schon beim Bedrucken der Etikettenfolien eine wichtige Rolle. So muss beim Bogendruckverfahren die noch unbedruckte (zu bedruckende) Folienstruktur eine Bewegung der einzelnen Folienlagen gegeneinander ermöglichen, insbesondere zum Entstapeln beim Anlegen des Folienstrukturstapels an die Druckmaschine, zum Unterschuppen im Druckprozess oder zum "Rütteln" des Folienstrukturstapels, damit dieser bündig ist.

Da gerade in einem Folienstapel auf die unten liegenden Bögen höhere Gewichte wirken als auf die darüber liegenden Bögen, muss die Bewegung der einzelnen Folienlagen auch unter höheren Druck gegeben sein.

EP 0 545 650 B1 beschreibt eine Polymerfolie, die fünf coextrudierte, gemeinsam biaxial ausgerichtete Schichten besitzt und eine Kernschicht aus mit Vakuolen versehenem Polypropylen-Homopolymer mit beidseitig von ihr angeordneten Schichten aus im Wesentlichen Vakuolen-freiem Polyproylen-Homopolymer sowie jeweils eine Außenschicht aus heißsiegelbarem Polymer auf den Schichten aus im Wesentlichen Vakuolen-freiem Polypropylen-Homopolymer aufweist, so dass die Folie heißsiegelbar ist, wobei die Schichten aus im Wesentlichen Vakuolen-freiem Polypropylen-Homopolymer jeweils eine Dicke von 1 bis 5 µm haben. Dabei soll sich die Polymerfolie durch eine gute Einstichfestigkeit auszeichnen. In einem Ausführungsbeispiel wird eine Polymerfolie mit einer Dichte von 0,66 g/cm3, einer optischen Dichte von 0,61 und einem Glanz von 50 bei 20° beschrieben.

Angaben zum Glanz der Folie bei 60° sind der Druckschrift nicht zu entnehmen. Allerdings ist aufgrund literaturbekannter Zusammenhänge davon auszugehen, dass bei einem Glanz von 50 Glanzeinheiten bei 20° bei einem Winkel von 60° mehr als 70 Glanzeinheiten zu erwarten sind.

EP 0 611 102 B1 offenbart eine biaxial orientierte Polypropylenfolie, die eine Innenschicht aus Vakuolen-enthaltendem Polypropylen-Homopolymer mit einer Schicht aus Vakuolen-freiem Polypropylen-Homopolymer auf der einen Oberfläche und eine bedruckbare Außenschicht auf der Vakuolen-freien Polypropylen-Homopolymerschicht umfasst. Dabei ist bedruckbare Außenschicht aus einem Polyolefin gebildet, das Einheiten enthält, die sich von zwei oder mehr Stoffen der Verbindungen Ethylen, Propylen, But-1-en und höheren α-Olefinen ableiten. Darüber hinaus befindet sich auf der der Vakuolen-freien Schicht gegenüberliegenden Oberfläche der Innenschicht noch mindestens eine weitere Polymerschicht, deren Außenoberfläche matt ist und eine Mischung von inkompatiblen Polymeren umfasst Weiterhin enthält die Innenschicht und/oder die Vakuolen-freie Schicht Titandioxid.

Die Folie dieser Druckschrift wird u. a. zum In-Mould-Etikettieren eingesetzt.

In der Beschreibung weist diese Druckschrift darauf hin, dass die Verwendung einer matten Oberfläche das Haften der bedruckbaren Schicht auf dieser verhindert und dadurch die Neigung von aus solchen Folien hergestellten Etiketten verringert, aneinanderzukleben, wenn ein Etikett von einem Etikettenstapel weggezogen wird, beispielsweise durch Ansaugen der bedruckbaren Oberfläche der Etiketten.

Aussagen zum Glanz der Folie sind dieser Druckschrift allerdings nicht zu entnehmen.

EP 0 862 991 B1 betrifft die Verwendung eines Etiketts als In-Mould-Etikett, das aus einer biaxial orientierten Polymerfolie hergestellt ist, die eine Kernschicht aus einem Vakuolen-haltigen Propylen-Homopolymer mit einer Dichte von bis zu 0,70 g/cm³ und auf jeder Oberfläche der Kernschicht mindestens eine im Wesentlichen nicht Vakuolen-haltige Schicht aufweist, wobei das Verhältnis der kombinierten Schichtdicke der nicht Vakuolen-haltigen Schichten auf den jeweiligen Oberflächen der Kernschicht zwischen 2:1 und 1:1 beträgt und die Kernschicht und die im Wesentlichen nicht Vakuolen-haltigen Schichten coextrudiert wurden.

Aussagen zum Glanz der Folie sind dieser Druckschrift allerdings nicht zu entnehmen.

WO 2009/010178 A1 beschreibt die Verwendung einer mehrschichtigen, opaken, biaxial-orientierten Polyolefinfolie aus einer Vakuolen-haltigen Basisschicht und mindestens einer inneren Deckschicht als In-Mould-Etikett bei Tiefziehen. Dabei umfasst die Deckschicht mindestens 30 - 95 Gew.-% eines Co- und/oder Terpolymeren I mit einem Siegelanspringtemperatur I von 70 - 105°C und 5 bis 70 Gew.-% eines unverträglichen Polyethylens, wobei sich die Angaben in Gew.-% jeweils auf das Gewicht der inneren Deckschicht beziehen. Die Siegelanspringtemperatur II der inneren Deckschicht soll in diesem Zusammenhang im Bereich von 80 bis 110°C liegen.

Aussagen zum Glanz der Folie sind dieser Druckschrift allerdings nicht zu entnehmen.

Vor diesem Hintergrund lag der vorliegenden Erfindung die Aufgabe zugrunde, Möglichkeiten zur Verbesserung der bekannten In-Mould-Etikettierverfahren aufzuzeigen. Dabei wurden insbesondere Möglichkeiten zur Verbesserung der Entstapelbarkeit der Etikettierfolien und somit zur Verbesserung der Raum-Zeit-Ausbeute herkömmlicher In-Mould-Etikettierverfahren gesucht. Besonderes Augenmerk wurde dabei auf eine Verbesserung der Entstapelbarkeit herkömmlicher unbedruckter Folien gelegt, damit diese möglichst effizient, insbesondere im Bogendruckverfahren, bedruckt werden können, welches wiederum die Effizienz des gesamten In-Mould-Etikettierverfahrens verbessern würde. Die übrigen Eigenschaften der bekannten In-Mould-Etiketten sollten möglichst nicht nachteilig beeinflusst, sondern im Gegenteil nach Möglichkeit noch weiter verbessert werden. Schließlich sollte die erfindungsgemäße Lösung auf vergleichbar einfache Art und Weise großtechnisch und kostengünstig umsetzbar sein.

Gelöst werden diese sowie weitere Aufgaben der vorliegenden Erfindung, die sich aus den in dieser Anmeldung diskutierten Zusammenhängen unmittelbar ergeben, durch eine Folie gemäß Patentanspruch 1. Die auf Anspruch 1 rückbezogenen Unteransprüche beschreiben besonders vorteilhafte Ausgestaltungen der erfindungsgemäßen Folie. Die übrigen Ansprüche schützen bevorzugte Anwendungsgebiete der erfindungsgemäßen Folie.

Durch die Bereitstellung einer mehrschichtigen, opaken, biaxial-orientierte Polyolefinfolie mit einer Dicke von kleiner 150 µm, umfassend
a. eine Vakuolen-haltige Basisschicht, die mindestens ein Polymer mindestens eines Olefins enthält,
b. eine innere Zwischenschicht, die mindestens ein Polymer mindestens eines Olefins enthält,
c. eine äußere Zwischenschicht, die mindestens ein Polymer mindestens eines Olefins enthält
d. eine innere Deckschicht, die 5 - 70 Gew.-% mindestens eines Polyethylens sowie 30 - 95 Gew.-% mindestens eines Propylenpolymers enthält, und
e. eine äußere Deckschicht, die 5 - 70 Gew.-% mindestens eines Polyethylens sowie 30 - 95 Gew.-% mindestens eines Propylenpolymers enthält,
wobei sich die Mengenangaben jeweils auf das Gewicht der jeweiligen Schicht beziehen,
wobei die Folie auf beiden Seiten einen Glanz, gemessen gemäß DIN EN ISO 2813 bei einem Winkel von 60° und bei einer Temperatur von 25°C, kleiner 50 Glanzeinheiten aufweist,
gelingt es auf nicht ohne Weiteres vorhersehbare Weise, eine signifikante Verbesserung der bekannten In-Mould-Etikettierverfahren zu erreichen. Erfindungsgemäß wird insbesondere eine verbesserte Entstapelbarkeit der einzelnen Folie ermöglicht, die in In-Mould-Etikettierverfahren zu einer deutlichen Verbesserung der Raum-Zeit-Ausbeute führt. Dabei erlaubt insbesondere die Verbesserung der Entstapelbarkeit der unbedruckter Folien eine äußerst effiziente Bedruckung der erfindungsgemäßen Folien, insbesondere im Bogendruckverfahren, welches wiederum die Effizienz des gesamten In-Mould-Etikettierverfahrens verbessert. Die übrigen Eigenschaften der Folien werden im Rahmen der vorliegenden Erfindung nicht nachteilig beeinflusst, sondern im Gegenteil noch weiter verbessert. So wird zum Beispiel die Bedruckbarkeit und die Farbhaftung der Folie nicht verschlechtert. Das optische Erscheinungsbild und die Haptik des Etiketts selber und des etikettierten Behälters werden verbessert. Gleichzeitig bleiben die Steifigkeit und ggf. Opazität und Weissgrad der Folie. Schließlich kann die erfindungsgemäße Lösung auf vergleichbar einfache Art und Weise großtechnisch und kostengünstig in bestehende In-Mould-Etikettierverfahren implementiert werden.

Gegenstand der vorliegenden Erfindung ist dementsprechend eine mehrschichtige, opake, biaxial-orientierte Polyolefinfolie, umfassend
a. eine vakuolenhaltige Basisschicht,
b. eine innere Zwischenschicht,
c. eine äußere Zwischenschicht,
d. eine innere Deckschicht, und
e. eine äußere Deckschicht.

Die Basisschicht der Folie enthält mindestens ein Polymer mindestens eines Olefins, zweckmäßigerweise mindestens ein Propylenpolymer, insbesondere mindestens ein Propylenhomopolymer. Der Anteil des Polymers beträgt günstigerweise mindestens 70 Gew. %, vorzugsweise 75 bis 99 Gew. %, insbesondere 80 bis 98 Gew. %, jeweils bezogen auf das Gewicht der Basisschicht.

Im Allgemeinen enthält das Propylenpolymer mindestens 90 Gew. %, vorzugsweise 94 bis 100 Gew. %, insbesondere 98 bis <100 Gew. %, Polypropyleneinheiten. Der entsprechende Comonomergehalt von höchstens 10 Gew. % bzw. 0 bis 6 Gew. % bzw. >0 bis 2 Gew. % leitet sich, wenn vorhanden, im Allgemeinen von Ethylen ab. Die Angaben in Gew. % beziehen sich jeweils auf das Propylenpolymer.

Bevorzugt sind isotaktische Propylenhomopolymere mit einem Schmelzpunkt von 140 bis 170°C, vorzugsweise von 150 bis 165°C, und einem Schmelzflußindex (Messung ISO 1133 bei 2,16 kg Belastung und 230°C) von 1,0 bis 10 g/10 min, vorzugsweise von 1,5 bis 6,5 g/10 min. Der n-heptanlösliche Anteil des Polymers beträgt im Allgemeinen 0,5 bis 10 Gew. %, vorzugsweise 2 bis 5 Gew.-%, bezogen auf das Ausgangspolymer. Die Molekulargewichtsverteilung des Propylenpolymers kann variieren. Das Verhältnis des Gewichtsmittels Mw zum Zahlenmittel Mn liegt im Allgemeinen zwischen 1 und 15, vorzugsweise bei 2 bis 10, ganz besonders bevorzugt bei 2 bis 6. Eine derartig enge Molekulargewichtsverteilung des Propylenpolymers der Basisschicht erreicht man beispielsweise durch dessen peroxidischen Abbau oder durch Herstellung des Polypropylens mittels geeigneter Metallocenkatalysatoren. Für die Zwecke der vorliegenden Erfindung sind auch hochisotaktische bzw. hochkristalline Polypropylene geeignet, deren Isotaktizität nach ¹³C-NMR mindestens 95%, vorzugsweise 96 - 99% beträgt. Derartige hochisotaktische Polypropylene sind an sich im Stand der Technik bekannt und werden sowohl als HIPP als auch als HCPP bezeichnet.

Weiterhin umfasst die Basisschicht vorzugsweise Vakuolen-initierende Füllstoffe, insbesondere in einer Menge von maximal 30 Gew.-%, vorzugsweise 1 bis 20 Gew.-%, insbesondere 2 bis 15 Gew.-%, bezogen auf das Gewicht der Basisschicht. Zusätzlich zu den Vakuolen-initierenden Füllstoffen kann die Basisschicht Pigmente enthalten, beispielsweise in einer Menge von 0,5 bis 10 Gew. %, vorzugsweise 1 bis 8 Gew.-%, insbesondere 1 bis 5 Gew.-%. Die Angaben beziehen sich jeweils auf das Gewicht der Basisschicht.

*"Pigmente"* sind im Sinne der vorliegenden Erfindung unverträgliche Teilchen, die im Wesentlichen nicht zur Vakuolenbildung beim Verstrecken der Folie führen. Die färbende Wirkung der Pigmente wird durch die Teilchen selbst verursacht. Pigmente haben im Allgemeinen einen mittleren Teilchendurchmesser von 0,01 bis maximal 1 µm, vorzugsweise 0,01 bis 0,7 µm, insbesondere 0,01 bis 0,4 µm. Pigmente umfassen sowohl sogenannte *"Weißpigmente",* welche die Folien weiß einfärben, als auch *"Buntpigmente"*, welche der Folie eine bunte oder schwarze Farbe verleihen. Übliche Pigmente sind Materialien, wie z.B. Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Weißpigmente, wie Calciumcarbonat, Siliciumdioxid, Titandioxid und Bariumsulfat, bevorzugt eingesetzt werden.

Die Titandioxidteilchen bestehen im Allgemeinen zu mindestens 95 Gew. % aus Rutil und werden bevorzugt mit einem Überzug aus anorganischen Oxiden und/oder aus organische Verbindungen mit polaren und unpolaren Gruppen eingesetzt. Derartige Beschichtungen des TiO₂ sind im Stand der Technik bekannt.

Im Sinne der vorliegenden Erfindung sind "*Vakuolen-inizlierende Füllstoffe"* feste Teilchen, die mit der Polymermatrix unverträglich sind und beim Verstrecken der Folien zur Bildung von vakuolenartigen Hohlräumen führen, wobei Größe, Art und Anzahl der Vakuolen von der Größe und der Menge der festen Teilchen und den Streckbedingungen, wie Streckverhältnis und Strecktemperatur, abhängig sind. Die Vakuolen reduzieren die Dichte und geben den Folien ein charakteristisches perlmuttartiges, opakes Aussehen, welches durch Lichtstreuung an den Grenzflächen "*Vakuole*/*Polymermatrix*" entsteht. Die Lichtstreuung an den festen Teilchen selbst trägt zur Opazität der Folie im Allgemeinen vergleichsweise wenig bei. In der Regel haben die Vakuolen-iniziierenden Füllstoffe eine Mindestgröße von 1 µm, um zu einer effektiven, d.h. opak machenden Menge an Vakuolen zu führen. Im Allgemeinen beträgt der mittlere Teilchendurchmesser der Teilchen 1 bis 6 µm, vorzugsweise 1,5 bis 5 µm. Der chemische Charakter der Teilchen spielt eine untergeordnete Rolle, sofern Unverträglichkeit vorliegt.

Übliche Vakuolen-iniziierende Füllstoffe sind anorganische und/oder organische, mit Polypropylen unverträgliche Materialien, wie Aluminiumoxid, Aluminiumsulfat, Bariumsulfat, Calciumcarbonat, Magnesiumcarbonat, Silicate, wie Aluminiumsilicat (Kaolinton) und Magnesiumsilicat (Talkum) und Siliciumdioxid, worunter Calciumcarbonat und Siliciumdioxid bevorzugt eingesetzt werden. Als organische Füllstoffe kommen die üblicherweise verwendeten, mit dem Polymer der Basisschicht unverträglichen Polymere in Frage, insbesondere solche, wie HDPE, Copolymere von cyclischen Olefinen, wie Norbornen oder Tetracyclododecen, mit Ethylen oder Propylen, Polyester, Polystyrole, Polyamide, halogenierte organische Polymere, wobei Polyester, wie beispielsweise Polybutylenterephthalate, bevorzugt sind. *"Unverträgliche Materialien*" oder *"unverträgliche Polymere"* bezeichnen im Sinne der vorliegenden Erfindung solche Materialien oder Polymere, die in der Folie als separate Teilchen oder als separate Phase vorliegen

Die Dichte der erfindungsgemäßen Folie kann je nach Zusammensetzung der Basisschicht In einem weiten Bereich variieren. Dabei tragen Vakuolen zu einer Erniedrigung der Dichte bei, wohingegen Pigmente, wie z.B. TiO₂ auf Grund des höheren spezifischen Gewichts die Dichte der Folie erhöhen. Vorzugsweise liegt die Dichte der Folie im Bereich von 0,4 bis 0,8 g/cm³, insbesondere im Bereich von 0,5 bis 0,75 g/cm³.

Zusätzlich kann die Basisschicht übliche Additive, wie Neutralisationsmittel, Stabilisatoren, Antistatika und/oder Gleitmittel, in jeweils wirksamen Mengen enthalten. Die nachstehenden Angaben in Gew.-% beziehen sich jeweils auf das Gewicht der Basisschicht.

Bevorzugte Antistatika sind Glycerinmonostearate, Alkalialkansulfonate, polyethermodifizierte, insbesondere ethoxylierte und/oder propoxylierte, Polydiorganosiloxane (Polydialkylsiloxane, Polyalkylphenylsiloxane und dergleichen) und/oder die im Wesentlichen geradkettigen und gesättigten aliphatischen, tertiären Amine mit einem aliphatischen Rest mit 10 bis 20 Kohlenstoffatomen, die mit α-Hydroxy-(C₁-C₄)-alkyl-Gruppen substituiert sind, wobei N,N-Bis-(2-hydroxyethyl)-alkylamine mit 10 bis 20 Kohlenstoffatomen, vorzugsweise 12 bis 18 Kohlenstoffatomen, im Alkylrest besonders geeignet sind. Die bevorzugte Menge an Antistatikum liegt im Bereich von 0,05 bis 0,5 Gew.-%.

Als Gleitmittel eignen sich insbesondere höhere aliphatische Säureamide, höhere aliphatische Säureester, Wachse und Metallseifen sowie Polydimethylsiloxane. Die bevorzugte Menge an Gleitmittel liegt im Bereich von 0,01 bis 3 Gew.-%, vorzugsweise 0,02 bis 1 Gew. %. Besonders geeignet ist der Zusatz von höheren aliphatischen Säureamiden im Bereich von 0,01 bis 0,25 Gew. % in der Basisschicht. Ganz besonders geeignete aliphatische Säureamide sind Erucasäureamid und Stearylamid.

Als Stabilisatoren können die üblichen, stabilisierend-wirkenden Verbindungen für Ethylen-, Propylen- und andere Olefinpolymere eingesetzt werden. Deren Zusatzmenge liegt vorzugsweise zwischen 0,05 und 2 Gew.-%. Besonders geeignet sind phenolische und phosphitische Stabilisatoren, wie Tris-2,6-dimethylphenylphosphit. Phenolische Stabilisatoren mit einer Molmasse von mehr als 500 g/mol werden bevorzugt, insbesondere Pentaerythrityl-Tetrakis-3-(3,5-di-Tertiärbutyl-4-Hydroxy-phenyl)-Propionat oder 1,3,5-Trimethyl-2,4,6-tris(3,5-di-Tertiärbutyl-4-Hydroxybenzyl)benzol. Dabei werden phenolische Stabilisatoren allein zweckmäßigerweise in einer Menge von 0,1 bis 0,6 Gew.-%, insbesondere 0,1 bis 0,3 Gew.-%, phenolische und phosphitische Stabilisatoren bevorzugt im Verhältnis 1 : 4 bis 2 : 1 und in einer Gesamtmenge von 0,1 bis 0,4 Gew.-%, insbesondere 0,1 bis 0,25 Gew.-%, eingesetzt.

Bevorzugte Neutralisationsmittel umfassen Dihydrotalcit, Calciumstearat und/oder Calciumcarbonat mit einer mittleren Teilchengröße von höchstens 0,7 µm, einer absoluten Teilchengröße von kleiner 10 µm und einer spezifischen Oberfläche von mindestens 40 m²/g. Im Allgemeinen werden 0,02 bis 0,1 Gew.-% zugesetzt. Neben der Basisschicht umfasst die erfindungsgemäße Folie eine innere Deckschicht und eine äußere Deckschicht.

Die innere Deckschicht ist im Sinne der vorliegenden Erfindung diejenige Deckschicht, welche beim Etikettieren dem Behältnis zugewandt ist und beim Etikettieren die Verbindung zwischen dem Behälter und dem Etikett bildet.

Die äußere Deckschicht ist im Sinne der vorliegenden Erfindung diejenige Deckschicht, welche beim Etikettieren dem Behältnis abgewandt ist und beim Etikettieren nach Außen zeigt.

Die innere Deckschicht und die äußere Deckschicht enthalten, jeweils unabhängig von einander, mindestens ein Propylenpolymer, bevorzugt ein Propylenhomopolymer und/oder mindestens ein Propylencopolymer mit Polyethylen-Einheiten und/oder Polybutylen-Einheiten, und ein Polyethylen. Im Allgemeinen enthalten die innere Deckschicht und die äußere Deckschicht, jeweils unabhängig von einander, mindestens 30 bis 95 Gew.-%, vorzugsweise 45 bis 85 Gew.-%, insbesondere 50 bis 80 Gew.-% des mindestens einen Propylenpolymers und 5 bis 70 Gew.-%, vorzugsweise 15 bis 55 Gew.-%, insbesondere 20 bis 50 Gew.-% des Polyethylens, jeweils bezogen auf das Gewicht der jeweiligen Schicht.

Für die vorliegenden Zwecke besonders geeignete Propylencopolymere umfassen Polyethylen-Einheiten und/oder Polybutylen-Einheiten, insbesondere Ethylen-Propylencopolymere, Propylen-Butylencopoylmere und Ethylen-Propylen-Butylencopolymere. Die Zusammensetzung der Propylencopolymere aus den jeweiligen Monomeren kann innerhalb der nachstehend beschriebenen Grenzen variieren. Im Allgemeinen enthalten die Propylencopolymere über 50 Gew.-% Polypropylen-Einheiten. Bevorzugte Propylencopolymere enthalten mindestens 60 Gew.-%, vorzugsweise 65 bis 97 Gew.-% Polypropylen-Einheiten und höchstens 40 Gew.-%, vorzugsweise 3 bis 35 Gew.-% Polyethylen- und/oder Polybutylen-Comonomereinheiten. Weiterhin sind auch Terpolymere besonders vorteilhaft, die 65 bis 96 Gew.-%, vorzugsweise 72 bis 93 Gew.-% Polypropylen-Einheiten, und 3 bis 34 Gew.-%, vorzugsweise 5 bis 26 Gew.-% Polyethylen-Einheiten und 1 bis 10 Gew.-%, vorzugsweise 2 bis 8 Gew.-% Polybutylen-Einheiten umfassen.

Gegebenenfalls können die vorstehend genannten Propylenpolymere untereinander gemischt werden. Hierbei können die Anteile in beliebigen Grenzen variiert werden, solange die übrigen Vorgaben der vorliegenden Erfindung, insbesondere hinsichtlich des Glanzes der Folie von beiden Seiten, erfüllt werden. Diese Mischungen werden dann in den vorstehend beschriebenen Mengen eingesetzt.

Es ist erfindungswesentlich, dass die Anteile des mindestens eines Propylenpolymers und des mindestens einen Polyethylens für die innere Deckschicht und die äußere Deckschicht jeweils aus den genannten Bereichen so gewählt werden, dass der Glanz der resultierenden Folie von beiden Seiten, gemessen gemäß DIN EN ISO 2813 bei einem Winkel von 60° und bei einer Temperatur von 25°C, kleiner 50 Glanzeinheiten, bevorzugt kleiner 40 Glanzeinheiten, ist. Gegebenenfalls sind weitere Maßnahmen, wie Oberflächenbehandlung, Schichtdicke und Zusatzstoffe, so zu wählen, dass diese Vorgaben für den Glanz erfüllt werden.

Der Schmelzindex der Propylenpolmere beträgt im Allgemeinen 0,1 bis 20 g/10 min (230°C, 2,16 kg), vorzugsweise 0,1 bis 15 g/10 min. Der Schmelzpunkt kann im Allgemeinen in einem Bereich von 70 bis 140°C liegen. In einer bevorzugten Ausführungsform werden Propylenpolymere eingesetzt, deren Schmelzpunkt mindestens 105 bis 140°C, vorzugsweise 110 bis 135°C beträgt. Diese Ausführungsformen zeichnen sich durch eine besonders gute Verarbeitbarkeit sowohl der Herstellung als auch bei der Verwendung der Folie aus. Es wurde gefunden, dass ein vergleichsweise hoher Schmelzpunkt von beispielsweise 110 - 135°C die Klebrigkeit und Blockneigung der Folie soweit herabsetzt, dass die Folie nicht mit Walzen verklebt und sich gut entstapeln lässt und zum In-Mould-Etikettieren hervorragend geeignet Ist.

Die zweite erfindungswesentliche Komponente der inneren Deckschicht und der äußeren Deckschicht ist mindestens ein Polyethylen, welches mit dem vorstehend beschriebenen Propylenpolymer unverträglich ist. *"Unverträglich"* bedeutet in diesem Zusammenhang, dass durch die Mischung des mindestens einen Propylenpolymers mit dem mindestens einen Polyethylen eine Oberflächenrauheit gebildet wird. Die Oberflächenrauheit Rz liegt im Allgemeinen in einem Bereich von 2,0 - 6 µm, vorzugsweise 2,5 - 4,5 µm, bei einem Cut-off von 0,25 mm. Geeignete Polyethylene sind beispielsweise HDPE oder MDPE. Das HDPE weißt im Allgemeinen die nachstehend beschriebenen Eigenschaften auf, beispielsweise einen MFI (21,6 kg/190°C) von größer 1 bis 50 g/10 min, vorzugsweise 1,5 bis 20 g/10 min, gemessen nach ISO 1133 und eine Viskositätszahl, gemessen nach DIN 53 728, Teil 4, oder ISO 1191, im Bereich von 100 bis 450 cm³/g, vorzugsweise 120 bis 280 cm³/g. Die Kristallinität beträgt im Allgemeinen 35 bis 80 %, vorzugsweise 50 bis 80 %. Die Dichte, gemessen bei 23°C nach DIN 53 479, Verfahren A, oder ISO 1183, liegt vorzugsweise im Bereich von >0,94 bis 0,96 g/cm³. Der Schmelzpunkt, gemessen mit DSC (Maximum der Schmeizkurve, Aufheizgeschwindigkeit 20°C/min), liegt vorzugsweise zwischen 120 und 140°C. Geeignetes MDPE hat im Allgemeinen einen MFI (21,6 kg/190°C) von größer 0,1 bis 50 g/10 min, vorzugsweise 0,6 bis 20 g/10 min, gemessen nach ISO 1133. Die Dichte, gemessen bei 23°C nach DIN 53 479, Verfahren A, oder ISO 1183, liegt vorzugsweise im Bereich von >0,925 bis 0,94 g/cm³. Der Schmelzpunkt, gemessen mit DSC (Maximum der Schmelzkurve, Aufheizgeschwindigkeit 20°C/min), liegt vorzugsweise zwischen 115 und 130°C.

Gegebenenfalls können die innere Deckschicht und/oder die äußere Deckschicht weitere olefinische Polymere in geringen Mengen enthalten, soweit dadurch nicht die Funktionalität, insbesondere die erfindungswesentliche Glanz der Folie von beiden Seiten gestört wird.

Besonders vorteilhaft wird die Oberfläche der inneren Deckschicht und/oder der äußeren Deckschicht einer Corona-, Plasma- oder Flammenbehandlung unterworfen. Diese Behandlung verbessert die Hafteigenschaften der jeweiligen Folienoberfläche für eine anschließende Dekoration und Bedruckung, d.h. die Benetzbarkeit mit und die Haftung von Druckfarben und sonstigen Dekorationsmitteln.

Die Schichtdicken der inneren Deckschicht und der äußeren Deckschicht betragen jeweils unabhängig voneinander im Allgemeinen 0,1 - 10 µm, vorzugsweise 0,3 bis 6 µm.

Die innere Deckschicht und die äußere Deckschicht können jeweils zusätzlich übliche Additive, wie Neutralisationsmittel, Stabilisatoren, Antistatika, Antiblockmittel und/oder Gleitmittel, in jeweils wirksamen Mengen enthalten. Die nachstehenden Angaben in Gew.-% beziehen sich auf das Gewicht der jeweiligen Schichten. Art und Menge derartiger Additive sollte so gewählt werden, dass der Glanz der Folien von beiden Seiten im geforderten Bereich bleibt.

Besonders geeignete Antiblockmittel sind anorganische Zusatzstoffe, wie Siliciumdioxid, Calciumcarbonat, Magnesiumsilicat, Aluminiumsilicat, Calciumphosphat und dergleichen und/oder unverträgliche organische Polymerisate, wie Polyamide, Polyester, Polycarbonate und dergleichen, oder vernetzte Polymere, wie vernetztes Polymethylmethacrylat oder vernetzte Siliconöle. Siliciumdioxid und Calciumcarbonat sind bevorzugt. Die mittlere Teilchengröße liegt vorzugsweise zwischen 1 und 6 µm, insbesondere 2 und 5 µm. Die bevorzugte Menge an Antiblockmittel liegt Im Bereich von 0,05 bis 5 Gew.-%, vorzugsweise 0,1 bis 3 Gew.-%, insbesondere 0,2 bis 2 Gew.-%.

Besonders geeignete Gleitmittel sind höhere aliphatische Säureamide, höhere aliphatische Säureester und Metallseifen sowie Polydimethylsiloxane. Die bevorzugte Menge an Gleitmittel liegt im Bereich von 0,01 bis 3 Gew.-%, vorzugsweise 0,02 bis 1 Gew. %, bezogen auf die jeweilige Schicht. Besonders geeignet ist der Zusatz von 0,01 bis 0,3 Gew.-% aliphatischer Säureamide, wie Erucasäureamid, oder 0,02 bis 0,5 Gew.-% von Polydimethylsiloxanen, insbesondere Polydimethylsiloxane mit einer Viskosität von 5 000 bis 1 000 000 mm²/s.

Darüber hinaus umfasst die erfindungsgemäße Folie eine innere Zwischenschicht, die zwischen der Basisschicht und der inneren Deckschicht angeordnet ist, und eine äußere Zwischenschicht, die zwischen der Basisschicht und der äußeren Deckschicht angeordnet ist.

Die innere Zwischenschicht und die äußere Zwischenschicht enthalten jeweils unabhängig voneinander mindestens ein Polymer mindestens eines Olefins, bevorzugt mindestens ein Propylenpolymer, insbesondere mindestens ein Propylenhomopolymer. Weiterhin können die innere Zwischenschicht und die äußere Zwischenschicht jeweils unabhängig voneinander die für die einzelnen Schichten beschriebenen üblichen Additive, wie Antistatika, Neutralisationsmittel, Gleitmittel und/oder Stabilisatoren enthalten. Die Dicke dieser Zwischenschicht ist vorzugsweise größer als 0,5 µm und liegt bevorzugt im Bereich von 0,6 bis 8 µm, insbesondere 1 bis 6 µm.

Darüber hinaus können die innere Zwischenschicht und die äußere Zwischenschicht, insbesondere die äußere Zwischenschicht, Vakuolen-iniziierenden Füllstoffe und/oder Pigmente, insbesondere TiO₂, beispielsweise in einer Menge von 2 bis 8 Gew.-%, enthalten. Die Dicke derartiger Zwischenschichten ist zweckmäßigerweise größer als 0,5 µm und liegt vorzugsweise im Bereich von 1,0 bis 15 µm, insbesondere 1,5 bis 10 µm.

Die Gesamtdicke der erfindungsgemäßen Folie ist kleiner 150 µm, bevorzugt kleiner 100 µm, Insbesondere höchstens 70 µm Andererseits ist sie größer 15 µm, bevorzugt größer 20 µm, insbesondere mindestens 25 µm. Dabei macht die Basisschicht vorzugsweise 40 bis 99 % der Gesamtfoliendicke aus.

Die erfindungsgemäße Folie zeichnet sich u. a. durch eine sehr gute Entstapelbarkeit aus. Die Trennkraft zum Entstapeln der Folie ist kleiner 20 N, bevorzugt kleiner 15 N, besonders bevorzugt kleiner 14 N, zweckmäßigerweise kleiner 13 N, insbesondere kleiner 12 N. Sie wird vorzugsweise gemäß der im experimentellen Teil näher beschriebenen Methode, günstigerweise bei 25°C, ermittelt. Dabei wird vorzugsweise die Trennkraft von einer Folienseite gegen eine Folienseite einer identischen Folie, vorzugsweise der ersten (beispielsweise inneren) Deckschicht der ersten Folie gegen die zweite (beispielsweise äußere) Deckschicht der zweiten Folie oder der zweiten (beispielsweise äußeren) Deckschicht der ersten Folie gegen die zweite (beispielsweise äußere) Deckschicht der zweiten Folie gemessen.

Die Stapelung der erfindungsgemäßen Folien erfolgt zweckmäßigerweise in einer Weise, dass die benötigte Trennkraft zum Entstapeln der Folien möglichst gering ist. Im Rahmen einer ersten besonders bevorzugten Ausführungsform der vorliegenden Erfindung werden mindestens zwei identische erfindungsgemäße Folien so übereinander gestapelt, dass die obere Deckschicht der ersten Folie mit der unteren Deckschicht der zweiten Folie in Kontakt steht. Im Rahmen einer weiteren besonders bevorzugten Ausführungsform der vorliegenden Erfindung werden mindestens drei identische erfindungsgemäße Folien so übereinander gestapelt, dass die obere Deckschicht der ersten Folie mit der oberen Deckschicht der zweiten Folie in Kontakt steht und die untere Deckschicht der zweiten Folie mit der unteren Deckschicht der dritten Folie in Kontakt steht.

Die Herstellung der erfindungsgemäßen Folie kann auf an sich bekannte Weise, beispielsweise durch ein Coextrusionsverfahren, erfolgen. Im Rahmen dieses Verfahrens werden die den einzelnen Schichten der Folie entsprechenden Schmelzen gleichzeitig und gemeinsam durch eine Flachdüse coextrudiert, die so erhaltene Folie zur Verfestigung auf einer oder mehreren Walze/n abgezogen, die mehrschichtige Folie anschließend gestreckt (orientiert), die gestreckte Folie thermofixiert und gegebenenfalls an der zur Behandlung vorgesehenen Oberflächenschicht plasma-, corona- oder flammbehandelt.

Eine biaxiale Streckung (Orientierung) kann sequentiell oder simultan durchgeführt werden. Die sequentielle Streckung wird im Allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist. Die weitere Beschreibung der Folienherstellung erfolgt am Beispiel einer Flachfolienextrusion mit anschließender sequentialer Streckung.

Zunächst wird, wie beim Extrusionsverfahren üblich, das Polymer oder die Polymermischung der einzelnen Schichten günstigerweise in einem Extruder komprimiert und verflüssigt, wobei die gegebenenfalls zugesetzten Additive bereits im Polymer oder in der Polymermischung enthalten sein können. Die Schmelzen werden dann zweckmäßigerweise gleichzeitig durch eine Flachdüse (Breitschlitzdüse) gepresst und die ausgepresste mehrschichtige Folie wird günstigerweise auf einer oder mehreren Abzugswalzen vorzugsweise bei einer Temperatur von 10 bis 100°C, insbesondere 10 bis 50°C, abgezogen, wobei sie abkühlt und sich verfestigt.

Die so erhaltene Folie wird dann im Allgemeinen längs und quer zur Extrusionsrichtung gestreckt, was zu einer Orientierung der Molekülketten führt. Das Längsstrecken wird man vorzugsweise bei einer Temperatur von 70 bis 130°C, insbesondere 80 bis 110°C, zweckmäßigerweise mit Hilfe zweier entsprechend dem angestrebten Streckverhältnis verschieden schnelllaufende Walzen durchführen und das Querstrecken vorzugsweise bei einer Temperatur von 120 bis 180°C mit Hilfe eines entsprechenden Kluppenrahmens. Die Längsstreckverhältnisse liegen günstigerweise im Bereich von 3 bis 8, vorzugsweise 4 bis 6. Die Querstreckverhältnisse liegen günstigerweise im Bereich von 5 bis 10, vorzugsweise 7 bis 9.

An die Streckung der Folie schließt sich vorzugsweise ihre Thermofixierung (Wärmebehandlung) an, wobei die Folie günstigerweise etwa 0,1 bis 10 s lang vorzugsweise bei einer Temperatur von 100 bis 160°C gehalten wird. Anschließend wird die Folie in üblicher Weise mit einer Aufwickeleinrichtung aufgewickelt.

Bevorzugt wird/werden nach der biaxialen Streckung eine oder beide Oberfläche/n der Folie nach einer der bekannten Methoden plasma-, corona- oder flammbehandelt. Die Behandlungsintensität liegt im Allgemeinen im Bereich von 35 bis 50 mN/m, vorzugsweise 37 bis 45 mN/m.

Bei der Coronabehandlung wird zweckmäßigerweise so vorgegangen, dass die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, dass Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so dass polare Einlagerungen in der im Wesentlichen unpolaren Polymermatrix entstehen.

Die Oberflächenbehandlung, wie z.B. Corona-Behandlung, kann sowohl sofort bei der Herstellung der Etikettenfolie wie auch zu einem späteren Zeitpunkt, z.B. unmittelbar vor dem Druckprozeß, erfolgen.

Die erfindungsgemäße Folie eignet sich insbesondere zum Einsatz als Etikett in In-Mould Etikettierverfahren. Die Verwendung der erfindungsgemäßen Folie führt dabei vor allem wegen der besseren Handhabbarkeit der erfindungsgemäßen Folie, insbesondere ihrer verbesserten Entstapelbarkeit, zu einer signifikanten Verbesserung der Raum-Zeit-Ausbeute der In-Mould-Etikettierverfahren. Dabei kann die Entstapelbarkeit der Folie ggf. durch Zusatz von Puder, das auf das in der Regel bedruckte Etikett aufgebracht wird und quasi als Abstandshalter fungiert, bei Bedarf noch weiter verbessert werden, auch wenn dies im Regelfall nicht mehr erforderlich ist.

Die Vorteile der besseren Entstapelbarkeit der erfindungsgemäßen Folie kommen insbesondere bei solchen In-Mould-Etikettierverfahren zum Tragen, bei welchen man eine erfindungsgemäße Folie zunächst mittels Bogendruck bedruckt und die bedruckte Folie dann in einem In-Mould-Etlkettierverfahren zur Herstellung des etikettierten Behälters einsetzt.

Die Art der Formgebung bei dem In-Mould-Etikettierverfahren unterliegt keinen besonderen Beschränkungen. Die erfindungsgemäße Folie eignet sich grundsätzlich für alle Verfahren, bei welchen die Folie am eigentlichen Formgebungsverfahren des Behälters teilnimmt und währenddessen appliziert wird. Dabei kann die Formgebung insbesondere durch Spritzguss, Blasformen oder Tiefziehen erfolgen.

In diesem Zusammenhang besonders vorteilhafte Spritzgussverfahren umfassen zunächst die Entnahme der einzelnen, ggf. zugeschnittenen Etiketten von einem Stapel, damit diese in eine Spritzgussform eingelegt werden können. Die Form ist dabei so gestaltet, dass der Schmelzestrom hinter das Etikett gespritzt wird und die Vorderseite der Folie an der Wandung der Spritzgussform anliegt. Beim Spritzen verbindet sich die heiße Schmelze mit dem Etikett. Nach dem Spritzen öffnet sich das Werkzeug, der Spritzling mit Etikett wird ausgestoßen und kühlt ab. Im Ergebnis soll das Etikett möglichst faltenfrei und optisch einwandfrei auf dem Behälter haften.

Beim Spritzen liegt der Einspritzdruck vorzugsweise in einem Bereich von 300 bis 600 bar. Die zum Einsatz kommenden Kunststoffe haben zweckmäßigerweise einen Schmelzflußindex von um die 40 g/10 min. Die Einspritztemperaturen hängen von dem eingesetzten Kunststoff ab. In manchen Fällen wird die Form zusätzlich gekühlt und ein Verkleben des Spritzlings mit der Form zu vermeiden.

Alternativ kann die Herstellung des etikettierten Behälters durch Blasformen erfolgen. Bei diesem Verfahren wird ein Schmelzeschlauch vorzugsweise durch eine Ringdüse vertikal nach unten extrudiert. Ein vorzugsweise vertikal geteiltes Formwerkzeug fährt zusammen und umschließt den Schlauch, der dabei am unteren Ende zugequetscht wird. Am oberen Ende wird vorzugsweise ein Blasdom eingeführt, durch den die Öffnung des Formlings ausgebildet wird. Über den Blasdom wird dem warmen Schmelzeschlauch vorzugsweise Luft zugeführt, so dass er sich ausdehnt und sich an die Innenwände des Formwerkzeugs anlegt. Hierbei sollte sich das Etikett mit dem zähflüssigen Kunststoff des Schmelzeschlauchs nach Möglichkeit verbinden. Anschließend wird die Form geöffnet und der Überstand an der geformten Öffnung vorzugsweise abgeschnitten. Der geformte und etikettierte Behälter wird ausgestoßen und kühlt ab.

Bei diesen Blasformverfahren beträgt der Druck beim Aufblasen des Schmelzeschlauchs vorzugsweise ca. 4-15 bar und die Temperaturen sind in der Regel wesentlich niedriger als beim Spritzgiessen. Die Kunststoffmaterialien haben meist einen niedrigeren MFI als beim Spitzgiessen, um einen formstabilen Schmelzeschlauch zu bilden und verhalten sich daher beim Abkühlungsprozeß anders als die niederviskosen Materialien für das Spritzgiessen.

Alternativ ist auch eine Formgebung durch ein Tiefziehverfahren besonders vorteilhaft. Beim Tiefziehen werden unorientierte dicke Kunststoffplatten, meist gegossenes PP oder PS (Polystyrol), in einer Dicke von vorzugsweise ca. 200 - 750 µm erwärmt und bevorzugt mittels Vakuum oder Stempelwerkzeugen in ein entsprechendes Formwerkzeug gezogen oder gedrückt. Auch hierbei wird das einzelne Etikett in die Form eingelegt und verbindet sich beim Formprozeß mit dem eigentlichen Behälter. Es kommen in der Regel erheblich niedrigere Temperaturen zur Anwendung.

Im Folgenden wird die vorliegende Erfindung durch Beispiele und ein Vergleichsbeispiel weiter veranschaulicht, ohne dass hierdurch eine Beschränkung des Erfindungsgedanken erfolgen soll.

Dabei wurden zur Charakterisierung der Rohstoffe und der Folien die folgenden Messmethoden benutzt:

### Schmelzflußindex

Der Schmelzflußindex der Propylenpolymeren wurde nach ISO 1133 bei 2,16 kg Belastung und 230°C gemessen und bei 190°C und 21,6 kg für Polyethylene.

### Schmelzpunkte

DSC-Messung, Maxima der Schmelzkurve, Aufheizgeschwindigkeit 20 K/min.

### Dichte

Die Dichte wird nach DIN 53 479, Verfahren A, bestimmt.

### Rauheitsmessung

Als Maß für die Rauheit der Oberflächen der Folien wurden die Rauheitswerte Rz der Folien in Anlehnung an DIN 4768 Teil 1 und DIN 4777 sowie DIN 4772 und 4774 mittels eines Perthometer Typ S8P der Firma Feinprüf Perthen GmbH, Göttingen, nach dem Tastschnitt-Verfahren gemessen. Der Messkopf, ein Einkufentastsystem gemäß DIN 4772, war mit einer Tastspitze mit dem Radius 5 µm und einem Flankenwinkel von 90° bei einer Auflagekraft von 0,8 bis 1,12 mN sowie einer Gleitkufe mit Radius 25 mm in Gleitrichtung ausgestattet. Der vertikale Messbereich wurde auf 62,5 µm, die Taststrecke auf 5,6 mm und der Cut-off des RC-Filters gemäß DIN 4768/1 auf 0,25 mm eingestellt.

### Glanzmessung

Die Messung erfolgte gemäß DIN EN ISO 2813 bei einem Winkel von 60° bei 25°C. Als Standard wurde eine polierte, dunkel gefärbte Glasplatte mit einem Brechungsindex von 1,567 (gemessen bei einer Wellenlänge von 587,6 nm und 25°C) verwendet, deren Glanz 100 Glanzeinheiten entsprach.

### Trennkraft-Bestimmung

Es wurde eine Labormethode entwickelt, die Unterschiede im Entstapelungs - Verhalten von Folien unter standardisierten Bedingungen aufzeigen kann. Ziel des Testes war die Bestimmung der Kraft, die benötigt wird, um zwei aufeinander liegende Folienflächen gegeneinander zu verschieben.

Um die aufeinander liegende Folienfläche konstant zu halten, wurde die Folie um einen Holzquader definierter Größe gewickelt. Der Holzquader hatte eine Grundfläche von 8,7 cm Länge und 5,7 cm Breite. Diese Grundfläche entsprach damit der Folien-Messfläche. Die Höhe des Quaders betrug 2,4 cm.

Der Holzquader wurde in einen passenden Folienabschnitt eingeschlagen und die Folie im Überlappungsbereich durch Heißsiegelung oder Klebeband fixiert. 2 so vorbereitete Holzquader wurden dann aufeinander gestapelt. Bei einem der Quader war dann zum Beispiel die innere Deckschicht der Folie außen liegend. Beim zweiten Quader war die äußere Deckschicht der Folie außen liegend.

Die in einem Folienstapel auf einen unten liegenden Bogen wirkende Kraft wurde in dem Test durch ein definiertes Gewicht imitiert. Deshalb wurde auf die beiden aufeinander liegenden Holzquader ein Metallquader gleicher Grundfläche gelegt, der ein Gewicht von 1,0 kg hatte.

Der so vorbereitetet Stapel wurde dann für 2h bei 70°C gelagert. Nach der Lagerzeit wurde dann der oben liegende Holzquader an seiner Querseite so fixiert, dass der unten liegende Quader gegen den Oberen verschoben werden konnte, ohne dass der oben liegende Quader und das darauf liegende Gewicht mit bewegt werden. Mit einer geeigneten Kraftmessdose wurde dann bestimmt, welche Kraft benötigt wurde, um den unteren Quader aus dem Stapel (oberer Holzquader und Gewicht) herauszuziehen.

### Beispiel 1

Nach dem Coextrusionsverfahren wurde aus einer Breitschlitzdüse eine fünfschichtige Vorfolie extrudiert. Diese Vorfolie wurde auf einer Kühlwalze abgezogen, verfestigt und anschließend in Längs- und Querrichtung orientiert und abschließend fixiert. Die Oberfläche der äußeren Deckschicht wurde mittels Corona zur Erhöhung der Oberflächenspannung vorbehandelt. Die fünfschichtige Folie hatte einen Schichtaufbau innere Deckschicht/innere Zwischenschicht/Basisschicht/äußere Zwischenschicht/äußere Deckschicht. Die einzelnen Schichten der Folie hatten die folgende Zusammensetzung:
innere Deckschicht (2,3 µm):
   65 Gew.-% Ethylen-Propylencopolymerisat mit einem Schmelzpunkt von 135°C und einem Schmelzflußindex von 7,3g/10 min bei 230°C und 2,16 kg Belastung (ISO 1133)
   35 Gew.-% Polyethylen mit einer Dichte von 0,934 g/cm³ und einem Schmelzflußindex (190°C und 21,6 kg) von 14,5 g/10 min.
innere Zwischenschicht (4,0 µm)
   99,88 Gew.-% Propylenhomopolymerisat (PP) mit einem n-heptanlöslichen Anteil von 4,5 Gew. % (bezogen auf 100 % PP), einem Schmelzpunkt von 165°C und einem Schmelzflußindex von 3,2 g/10 min bei 230°C und 2,16 kg Belastung (ISO 1133)
   0,12 Gew.-% Erucasäureamid (ESA)
Basisschicht (40,2 µm)
   85,95 Gew.-% Propylenhomopolymerisat (PP) mit einem n-heptanlöslichen Anteil von 4,5 Gew. % (bezogen auf 100 % PP) und einem Schmelzpunkt von 165°C und einem Schmelzflußindex von 3,2 g/10 min bei230°C und 2,16 kg Belastung (ISO 1133)
   14 Gew.-% Calciumcarbonat mit einem mittleren Teilchendurchmesser von 3,5 µm
   0,05 Gew.-% Erucasäureamid (ESA)
äußere Zwischenschicht (2,7 µm)
   94 Gew.-% Propylenhomopolymerisat (PP) mit einem n-heptanlöslichen Anteil von 4,5 Gew. % (bezogen auf 100 % PP), einem Schmelzpunkt von 165°C und einem Schmelzflußindex von 3,2 g/10 min bei 230°C und 2,16 kg Belastung (ISO 1133) 6 Gew.-% TiO₂ mit einem mittleren Teilchendurchmesser von 0,1 bis 0,3 µm
äußere Deckschicht (0,8 µm):
   70 Gew.-% Ethylen-Propylencopolymerisat mit einem Schmelzpunkt von 135°C und einem Schmelzflußindex von 7,3 g/10 min bei 230°C und 2,16 kg Belastung (ISO 1133)
   30 Gew.-% Polyethylen mit einer Dichte von 0,934 g/cm³ und einem Schmelzflußindex (190°C und 21,6 kg) von 14,5 g/10 min

Alle Schichten der Folie enthielten zusätzlich Stabilisator und Neutralisationsmittel in üblichen Mengen.

Im Einzelnen wurden die folgenden Bedingungen und Temperaturen bei der Herstellung der Folie gewählt:

| | |
|---|---|
| Extrusion: | Extrusionstemperatur ca. 250°C |
| Abkühlwalze: | Temperatur 25°C, |
| Längsstreckung: | T = 120°C |
| Längsstreckung um den | Faktor 4,8 |
| Querstreckung: | T = 155°C |
| Querstreckung um den | Faktor 8 |
| Fixierung | T = 133°C |

Die Folie wurde auf der Oberfläche der äußeren Deckschicht mittels Corona oberflächenbehandelt. Die Folie hatte eine Dichte von 0,56 g/cm³ und eine Dicke von 50 µm.

### Beispiel 2

Es wurde eine Folie nach Beispiel 1 folgender abweichender Schichtdicken hergestellt. Die Dicke der äußeren Deckschicht betrug 0,5 µm und die Dicke der äußeren Zwischenschicht betrug 2,1 µm. Die Dicken der übrigen Schichten, sowie die Zusammensetzung aller Schichten blieb unverändert.

### Beispiel 3

Es wurde eine Folie nach Beispiel 1 folgender abweichender Zusammensetzung der einzelnen Schichten hergestellt:
innere Deckschicht (1,5 µm):
   35 Gew.-% Ethylen-Propylencopolymerisat mit einem Schmelzpunkt von 135°C und einem Schmelzflußindex von 7,3 g/10 min bei 230°C und 2,16 kg Belastung (ISO 1133)
   35 Gew.-% Polyethylen mit einer Dichte von 0,934 g/cm³ und einem Schmelzflußindex (190°C und 21,6 kg) von 14,5 g/10 min 30 Gew.-% Ethylen-Propylen-Butylencopolymerisat mit einem Schmelzpunkt von 135°C und einem Schmelzflußindex von 5,5 g/10 min bei 230°C und 2,16 kg Belastung (ISO1133)
innere Zwischenschicht (4,3 µm)
   99,88 Gew.-% Propylenhomopolymerisat (PP) mit einem n-heptanlöslichen Anteil von 4,5 Gew. % (bezogen auf 100 % PP), einem Schmelzpunkt von 165°C und einem Schmelzflußindex von 3,2 g/10 min bei 230°C und 2,16 kg Belastung (ISO1133)
   0,12 Gew.-% Erucasäureamid (ESA)
Basisschicht (41,3 µm)
   84,95 Gew.-% Propylenhomopolymerisat (PP) mit einem n-heptanlöslichen Anteil von 4,5 Gew. % (bezogen auf 100 % PP) und einem Schmelzpunkt von 165°C und einem Schmelzflußindex von 3,2 g/10 min bei 230°C und 2,16 kg Belastung (ISO 1133)
   15 Gew.-% Calciumcarbonat mit einem mittleren Teilchendurchmesser von 3,5 µm
   0,05 Gew.-% Erucasäureamid (ESA)
äußere Zwischenschicht (2,3 µm)
   94 Gew.-% Propylenhomopolymerisat (PP) mit einem n-heptanlöslichen Anteil von 4,5 Gew. % (bezogen auf 100 % PP), einem Schmelzpunkt von 165°C und einem Schmelzflußindex von 3,2 g/10 min bei 230°C und 2,16 kg Belastung (ISO 1133) 6 Gew.-% TiO₂ mit einem mittleren Teilchendurchmesser von 0,1 bis 0,3 µm
äußere Deckschicht (0,6 µm):
   60 Gew.-% Ethylen-Propylen-Butylencopolymerisat mit einem Schmelzpunkt von 135°C und einem Schmelzflußindex von 5,5 g/10 min bei 230°C und 2,16 kg Belastung (ISO 1133)
   20 Gew.-% Ethylen-Propylencopolymerisat mit einem Schmelzpunkt von 135°C und einem Schmelzflußindex von 7,3 g/10 min bei 230°C und 2,16 kg Belastung (ISO 1133)
   20 Gew.-% Polyethylen mit einer Dichte von 0,934 g/cm³ und einem Schmelzflußindex (190°C und 21,6 kg) von 14,5 g/10 min.

Alle Schichten der Folie enthielten zusätzlich Stabilisator und Neutralisationsmittel in üblichen Mengen.

### Vergleichsbeispiel

Es wurde eine Folie nach Beispiel 1 folgender abweichender Zusammensetzung der einzelnen Schichten hergestellt:
innere Deckschicht (0,5 µm):
   100 Gew% Ethylen-Propylencopolymerisat mit einem Schmelzpunkt von 135°C und einem Schmelzflußindex von 7,3 g/10 min bei 230°C und 2,16 kg Belastung (ISO 1133)
innere Zwischenschicht (3,6 µm)
   100 Gew.-% Propylenhomopolymerisat (PP) mit einem n-heptanlöslichen Anteil von 4,5 Gew. % (bezogen auf 100 % PP), einem Schmelzpunkt von 165°C und einem Schmelzflußindex von 3,2 g/10 min bei 230°C und 2,16 kg Belastung (ISO 1133)
Basisschicht (39,1 µm)
   89 Gew.-% Propylenhomopolymerisat (PP) mit einem n-heptanlöslichen Anteil von 4,5 Gew. % (bezogen auf 100 % PP) und einem Schmelzpunkt von 165°C und einem Schmelzflußindex von 3,2 g/10 min bei 230°C und 2,16 kg Belastung (ISO 1133)
   8,6 Gew.-% Calciumcarbonat mit einem mittleren Teilchendurchmesser von 3,5 µm
   2,4 Gew.-% TiO₂ mit einem mittleren Teilchendurchmesser von 0,1 bis 0,3 µm
äußere Zwischenschicht (6,3 µm)
   96,4 Gew.-% Propylenhomopolymerisat (PP) mit einem n-heptanlöslichen Anteil von 4,5 Gew. % (bezogen auf 100 % PP), einem Schmelzpunkt von 165°C und einem Schmelzflußindex von 3,2 g/10 min bei 230°C und 2,16 kg Belastung (ISO 1133)
   3,6 Gew.-% TiO₂ mit einem mittleren Teilchendurchmesser von 0,1 bis 0,3 µm
äußere Deckschicht (0,5 µm):
   10 Gew.-% Ethylen-Propylencopolymerisat mit einem Schmelzpunkt von 135°C und einem Schmelzflußindex von 7,3 g/10 min bei 230°C und 2,16 kg Belastung (ISO 1133)
   5 Gew.-% Polyethylen mit einer Dichte von 0,937 g/cm³ und einem Schmelzflußindex (190°C und 21,6 kg) von 14,5 g/10 min
   85 Gew.-% Ethylen-Propylen-Butylencopolymerisat mit einem Schmelzpunkt von 135°C und einem Schmelzflußindex von 5,5 g/10 min bei 230°C und 2,16 kg Belastung (ISO 1133)

Alle Schichten der Folie enthielten zusätzlich Stabilisator und Neutralisationsmittel in üblichen Mengen.

Der Ergebnisse der Messungen der Trennkraft an diesen Folien werden in der folgenden Tabelle zusammengefasst.

**Tabelle**

| Messung | Obere Folie / Folienseite | | | Untere Folie / Folienseite | | | Trennkraft [N] |
|---|---|---|---|---|---|---|---|
| | | Glanz [GE] | Rz [µm] | | Glanz [GE] | Rz [µm] | |
| 1 | Beispiel 1 / innere Deckschicht | 16 | 3,4 | Beispiel 1 / äußere Deckschicht | 16 | 3,3 | 11 |
| 2 | Beispiel 2 / innere Deckschicht | 16 | 3,4 | Beispiel 2 / äußere Deckschicht | 30 | 4,2 | 11 |
| 3 | Beispiel 2 / äußere Deckschicht | 30 | 4,2 | Beispiel 2 / äußere Deckschicht | 30 | 4,2 | 13 |
| 4 | Beispiel 3 / äußere Deckschicht | 36 | 2,6 | Beispiel 3 / innere Deckschicht | 28 | 2,2 | 12 |
| 5 | Vergleichsbeispiel / äußere Deckschicht | 56 | 1,7 | Vergleichsbeispiel / äußere Deckschicht | 56 | 1,7 | 20 |

## Patentansprüche

1. Mehrschichtige, opake, biaxial-orientierte Polyolefinfolie mit einer Dicke von kleiner 150 µm und größer 15µm, umfassend
a. eine Vakuolen-haltige Basisschicht, die mindestens ein Polymer mindestens eines Olefins enthält,
b. eine innere Zwischenschicht, die mindestens ein Polymer mindestens eines Olefins enthält,
c. eine äußere Zwischenschicht, die mindestens ein Polymer mindestens eines Olefins enthält,
d. eine innere Deckschicht, die 5 - 70 Gew.-% mindestens eines Polyethylens sowie 30 - 95 Gew.-% mindestens eines Propylenpolymers enthält, und
e. eine äußere Deckschicht, die 5 - 70 Gew.-% mindestens eines Polyethylens sowie 30 - 95 Gew.-% mindestens eines Propylenpolymers enthält,
wobei sich die Mengenangaben jeweils auf das Gewicht der jeweiligen Schicht beziehen, **dadurch gekennzeichnet, dass**
die Folie auf beiden Seiten einen Glanz, gemessen gemäß DIN EN ISO 2813 bei einem Winkel von 60° und bei einer Temperatur von 25°C, kleiner 50 Glanzeinheiten aufweist und die Trennkraft zum Entstapeln der Folie, gemessen von einer Folienseite gegen eine Folienseite, kleiner 20 N ist.

2. Folie nach Anspruch 1, **dadurch gekennzeichnet, dass** die Folie auf beiden Seiten einen Glanz, gemessen gemäß DIN EN ISO 2813 bei einem Winkel von 60° und bei einer Temperatur von 25°C, kleiner 40 Glanzeinheiten aufweist.

3. Folie nach Anspruch 1 oder 2, **dadurch gekennzeichnet, dass** die innere Deckschicht und die äußere Deckschicht, jeweils unabhängig voneinander, 15 - 55 Gew.-% mindestens eines Polyethylens sowie 45 - 85 Gew.-% mindestens eines Propylenpolymers enthalten.

4. Folie nach mindestens einem der vorangehenden Ansprüche, **dadurch gekennzeichnet, dass** die innere Deckschicht und die äußere Deckschicht, jeweils unabhängig voneinander, HDPE oder MDPE enthalten.

5. Folie nach mindestens einem der vorangehenden Ansprüche, **dadurch gekennzeichnet, dass** die innere Deckschicht und die äußere Deckschicht, jeweils unabhängig voneinander, mindestens ein Ethylen-Propylencopolymer, mindestens ein Propylen-Butylencopolymer oder mindestens ein Ethylen-Propylen-Butylencopolymer enthalten.

6. Folie nach mindestens einem der vorangehenden Ansprüche, **dadurch gekennzeichnet, dass** die innere Deckschicht und die äußere Deckschicht, jeweils unabhängig voneinander, mindestens ein Propylenpolymer mit einem Schmelzpunkt im Bereich von 105 bis 140°C enthalten.

7. Folie nach mindestens einem der vorangehenden Ansprüche, **dadurch gekennzeichnet, dass** die innere Zwischenschicht und die äußere Zwischenschicht jeweils mindestens ein Propylenpolymer enthalten.

8. Folie nach Anspruch 7, **dadurch gekennzeichnet, dass** die innere Zwischenschicht und die äußere Zwischenschicht jeweils mindestens 70 Gew.-% mindestens eines Propylenpolymers enthalten.

9. Folie nach mindestens einem der vorangehenden Ansprüche, **dadurch gekennzeichnet, dass** die Basisschicht mindestens ein Propylenpolymer enthält.

10. Folie nach mindestens einem der vorangehenden Ansprüche, **dadurch gekennzeichnet, dass** die Basisschicht mindestens 70 Gew.-% mindestens eines Propylenpolymers enthält.

11. Folie nach mindestens einem der vorangehenden Ansprüche, **dadurch gekennzeichnet, dass** die Dicke der inneren Deckschicht und der äußeren Deckschicht jeweils im Bereich von 0,1 bis 10,0 µm liegt.

12. Folie nach mindestens einem der vorangehenden Ansprüche, **dadurch gekennzeichnet, dass** die Dichte der Folie in einem Bereich 0,2 bis 0,80 g/cm³ liegt

13. Folie nach mindestens einem der vorangehenden Ansprüche, **dadurch gekennzeichnet, dass** die Folie auf beiden Seiten eine Oberflächenrauheit Rz in einem Bereich von 2,0 - 6 µm bei einem Cut-off von 0,25mm aufweist.

14. Folie nach mindestens einem der vorangehenden Ansprüche, **dadurch gekennzeichnet, dass** die Trennkraft zum Entstapeln der Folie, gemessen von einer Folienseite gegen eine Folienseite, kleiner 15 N ist.

15. Verwendung einer Folie nach mindestens einem der Ansprüche 1 bis 14 in einem In-Mould-Etikettierverfahren.

16. Verfahren zur Herstellung eines etikettierten Behälters, bei dem man eine Folie nach mindestens einem der Ansprüche 1 bis 14 mittels Bogendruck bedruckt und die bedruckte Folie in einem In-Mould-Etikettierverfahren zur Herstellung des etikettierten Behälters einsetzt.

## Claims

1. A multi-layered, opaque, biaxially oriented polyolefin film with a thickness of less than 150 µm and greater than 15 µm, comprising
a. a vacuole-containing base layer containing at least one polymer of at least one olefin,
b. an inner intermediate layer containing at least one polymer of at least one olefin,
c. an outer intermediate layer containing at least one polymer of at least one olefin,
d. an inner cover layer, which contains 5 - 70 % by weight of at least one polyethylene and also 30 - 95 % by weight of at least one propylene polymer, and
e. an outer cover layer, which contains 5 - 70 % by weight of at least one polyethylene and also 30 - 95 % by weight of at least one propylene polymer,
wherein the specified quantities in each case relate to the weight of the respective layer, **characterised in that**
the film on both sides has a gloss of less than 50 gloss units measured in accordance with DIN EN ISO 2813 at an angle of 60° and at a temperature of 25 °C and the separation force for destacking of the film is less than 20 N measured from a film side against a film side.

2. The film according to Claim 1, **characterised in that** the film on both sides has a gloss of less than 40 gloss units measured in accordance with DIN EN ISO 2813 at an angle of 60° and at a temperature of 25 °C.

3. The film according to Claim 1 or 2, **characterised in that** the inner cover layer and the outer cover layer, in each case independently of one another, contain 15 - 55 % by weight of at least one polyethylene and also 45 - 85 % by weight of at least one propylene polymer.

4. The film according to at least one of the preceding claims, **characterised in that** the inner cover layer and the outer cover layer, each independently of one another, contain HDPE or MDPE.

5. The film according to at least one of the preceding claims, **characterised in that** the inner cover layer and the outer cover layer, each independently of one another, contain at least one ethylene-propylene copolymer, at least one propylene-butylene copolymer or at least one ethylene-propylene-butylene copolymer.

6. The film according to at least one of the preceding claims, **characterised in that** the inner cover layer and the outer cover layer, each independently of one another, contain at least one propylene polymer with a melting point in the range from 105 to 140 °C.

7. The film according to at least one of the preceding claims, **characterised in that** the inner intermediate layer and the outer intermediate layer each contain at least one propylene polymer.

8. The film according Claim 7, **characterised in that** the inner intermediate layer and the outer intermediate layer each contain at least 70 % by weight of at least one propylene polymer.

9. The film according to at least one of the preceding claims, **characterised in that** the base layer contains at least one propylene polymer.

10. The film according to at least one of the preceding claims, **characterised in that** the base layer contains at least 70 % by weight of at least one propylene polymer.

11. The film according to at least one of the preceding claims, **characterised in that** the thickness of the inner cover layer and of the outer cover layer lies in each case in the range from 0.1 to 10.0 µm.

12. The film according to at least one of the preceding claims, **characterised in that** the density of the film lies in a range from 0.2 to 0.80 g/cm³.

13. The film according to at least one of the preceding claims, **characterised in that** the film on both sides has a surface roughness Rz in a range of 2.0 - 6 µm with a cutoff of 0.25 mm.

14. The film according to at least one of the preceding claims, **characterised in that** the separation force for destacking of the film is less than 15 N measured from a film side against a film side.

15. Use of a film according to at least one of Claims 1 to 14 in an in-mould labelling method.

16. A method for producing a labelled container, in which a film according to at least one of Claims 1 to 14 is printed by means of sheet-fed printing, and the printed film is used in an in-mould labelling method for the production of the labelled container.

## Revendications

1. Film en polyoléfine multicouches, opaque, à orientation biaxiale, d'une épaisseur inférieure à 150 µm et supérieure à 15µm, comprenant
a. une couche de base contenant des vacuoles, qui contient au moins un polymère d'au moins une oléfine,
b. une couche intermédiaire intérieure, qui contient au moins un polymère d'au moins une oléfine,
c. une couche intermédiaire extérieure, qui contient au moins un polymère d'au moins une oléfine,
d. une couche de couverture intérieure, qui contient de 5 à 70 % en poids d'au moins un polyéthylène, ainsi que de 30 à 95 % en poids d'au moins un polymère de propylène et
e. une couche de couverture extérieure, qui contient de 5 à 70 % en poids d'au moins un polyéthylène, ainsi que de 30 à 95 % en poids d'au moins un polymère de propylène,
les mentions quantitatives se rapportant respectivement au poids de la couche concernée, **caractérisé en ce que**
le film fait preuve sur les deux faces d'une brillance, mesurée selon la norme DIN EN ISO 2813 sous un angle de 60° et à une température de 25°C, inférieure à 50 unités de brillance et la force de séparation pour désempiler le film, mesurée d'une face de film contre une face de film est inférieure à 20 N.

2. Film selon la revendication 1, **caractérisé en ce que** le film fait preuve sur les deux faces d'une brillance, mesurée selon la norme DIN EN ISO 2813 sous un angle de 60° et à une température de 25 °C, inférieure à 40 unités de brillance.

3. Film selon la revendication 1 ou 2, **caractérisé en ce que** la couche de couverture intérieure et la couche de couverture extérieure contiennent, chaque fois indépendamment l'une de l'autre de 15 à 55 % en poids d'au moins un polyéthylène, ainsi que de 45 à 85 % en poids d'au moins un polymère de propylène.

4. Film selon au moins l'une quelconque des revendications précédentes, **caractérisé en ce que** la couche de couverture intérieure et la couche de couverture extérieure contiennent, chaque fois indépendamment l'une de l'autre du HDPE ou du MDPE.

5. Film selon au moins l'une quelconque des revendications précédentes, **caractérisé en ce que** la couche de couverture intérieure et la couche de couverture extérieure contiennent, chaque fois indépendamment l'une de l'autre au moins un copolymère d'éthylène/propylène, au moins un copolymère de propylène/butylène ou au moins un copolymère d'éthylène/propylène/butylène.

6. Film selon au moins l'une quelconque des revendications précédentes, **caractérisé en ce que** la couche de couverture intérieure et la couche de couverture extérieure contiennent, chaque fois indépendamment l'une de l'autre au moins un polymère de propylène avec un point de fusion de l'ordre de 105 à 140 °C.

7. Film selon au moins l'une quelconque des revendications précédentes, **caractérisé en ce que** la couche intermédiaire intérieure et la couche intermédiaire extérieure contiennent chacune au moins un polymère de propylène.

8. Film selon la revendication 7, **caractérisé en ce que** la couche intermédiaire intérieure et la couche intermédiaire extérieure contiennent chacune au moins 70 % en poids d'au moins un polymère de propylène.

9. Film selon au moins l'une quelconque des revendications précédentes, **caractérisé en ce que** la couche de base contient au moins un polymère de propylène.

10. Film selon au moins l'une quelconque des revendications précédentes, **caractérisé en ce que** la couche de base contient au moins 70 % en poids d'au moins un polymère de propylène.

11. Film selon au moins l'une quelconque des revendications précédentes, **caractérisé en ce que** l'épaisseur de la couche de couverture intérieure et de la couche de couverture extérieure se situe respectivement dans l'ordre de 0,1 à 10,0 µm t.

12. Film selon au moins l'une quelconque des revendications précédentes, **caractérisé en ce que** la densité du film se situe dans un ordre de 0,2 à 0,80 g/cm³.

13. Film selon au moins l'une quelconque des revendications précédentes, **caractérisé en ce que** lé film fait preuve sur les deux faces d'une rugosité superficielle Rz dans un ordre de 2,0 à 6 µm pour un point de coupure de 0,25 mm.

14. Film selon au moins l'une quelconque des revendications précédentes, **caractérisé en ce que** la force de séparation pour désempiler le film, mesurée d'une face de film contre une face de film est inférieure à 15 N.

15. Utilisation d'un film selon au moins l'une quelconque des revendications 1 à 14 dans un procédé d'étiquetage dans le moule.

16. Procédé, destiné à fabriquer un réservoir étiqueté, lors duquel on imprime un film selon au moins l'une quelconque des revendications 1 à 14 par impression feuille à feuille et on utilise le film imprimé dans un procédé d'étiquetage dans le moule, pour fabriquer le réservoir étiqueté.
